Europäisches Patentamt

European Patent Office

Office européen des brevets

(19)

(11) Veröffentlichungsnummer: **0 022 902**
**B1**

(12) **EUROPÄISCHE PATENTSCHRIFT**

(45) Veröffentlichungstag der Patentschrift:
21.09.83

(51) Int. Cl.³: **B 29 D 27/00**

(21) Anmeldenummer: 80101956.3

(22) Anmeldetag: 11.04.80

(54) **Verfahren zur Herstellung von Schaumstoffplatten.**

(30) Priorität: 19.07.79 DE 2929165

(43) Veröffentlichungstag der Anmeldung:
28.01.81 Patentblatt 81/4

(45) Bekanntmachung des Hinweises auf die Patenterteilung:
21.09.83 Patentblatt 83/38

(84) Benannte Vertragsstaaten:
**BE DE FR GB IT NL SE**

(56) Entgegenhaltungen:
**AT-B-351 242**
**DD-A-118 824**
**DE-B-1 504 276**
**DE-B-2 547 549**

(73) Patentinhaber: **Röhm GmbH, Kirschenallee**
**Postfach 4242, D-6100 Darmstadt 1 (DE)**

(72) Erfinder: **Pip, Wolfgang, Martin-Strasse 4,**
**D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Verfahren zur Herstellung von Schaumstoffplatten

Die Erfindung betrifft ein Verfahren gemäss dem Oberbegriff des Anspruchs 1 zur Herstellung von Schaumstoffplatten mit vorbestimmten Abmessungen und Raumgewichten aus Platten aus heiss schäumbarem Kunststoff, der ein Treibmittel enthält. Beim Erhitzen auf die Schäumtemperatur erweicht der Kunststoff und das Treibmittel geht unter Ausbildung von Schaumstoffporen in den gasförmigen Zustand über.

Wenn man Platten aus schäumbarem Kunststoff frei aufschäumen lässt, entstehen auch bei gleichen Ausgangsmassen Schaumstoffplatten von unterschiedlichen Abmessungen und unterschiedlichen Raumgewichten. Diese Schwankungen sind auf unvermeidliche Unterschiede in der Beschaffenheit des schäumbaren Materials und in den Schäumbedingungen zurückzuführen. Unterschiede in den beim Erhitzen erreichten Temperaturen oder in der Geschwindigkeit der Aufheizung können bereits bei ein und derselben Platte und noch mehr von einer Platte zur anderen Unterschiede im Schäumverhalten nach sich ziehen. Je stärker das Material aufschäumt, um so grösser sind die Abmessungen des Schaumstoffkörpers und um so geringer ist sein Raumgewicht. Für die Herstellung von Schaumstoffplatten mit standardisierten Abmessungen und Raumgewichten sind die auftretenden Schwankungen unerwünscht, da jede Schaumstoffplatte, die das Sollmass überschreitet, beschnitten werden muss. Eine wirtschaftliche Produktion standardisierter Schaumstoffplatten ist nur möglich, wenn sich das gewünschte Standardmass noch aus Schaumstoffplatten, die an der Untergrenze der Schwankungsbreite liegen, gewinnen lässt. Das bedeutet aber, dass die Mehrzahl aller Platten beschnitten werden muss, was zu beträchtlichen Verlusten führt. Ein erhöhter Rohmaterialbedarf entsteht auch infolge von Dichteschwankungen. Wegen der dichteabhängigen Festigkeitseigenschaften muss ein Mindestwert des Raumgewichts gewährleistet sein. Die Produktion muss so eingestellt werden, dass auch die Schaumstoffplatten mit der niedrigsten Dichte nicht unter der Mindestdichte liegen. Die Mehrzahl der Platten liegt also darüber und enthält mehr Material als für das Sollgewicht nötig wäre.

Es liegt nahe, die Mass- und Dichteschwankungen bei der Herstellung von Schaumstoffplatten dadurch zu verhindern, dass man den Schäumvorgang in einer Hohlform durchführt, die die Ausdehnung des schäumbaren Materials auf ein vorbestimmtes Volumen und infolgedessen auch auf ein vorbestimmtes Raumgewicht begrenzt. In dieser Weise wurde im Beispiel 3 der DE-PS 1 694 859 gearbeitet. Eine 1 cm dicke Platte eines Methacrylnitril-Methacrylsäure-Mischpolymerisats, die etwa 5% Harnstoff als Treibmittel enthielt, wurde in einer Hohlform, deren Innenraum in Länge, Breite und Höhe jeweils 2,7mal so gross wie die ursprüngliche Kunststoffplatte ist, auf 180 bis 200 °C erhitzt. Dabei wurde die Hohlform vollständig ausgefüllt.

In der Praxis ist dieses Verfahren mit erheblichen Schwierigkeiten verbunden, die eine geregelte Produktion unmöglich machen. Diese Schwierigkeiten haben ihre Ursache in den oben schon erwähnten Schwankungen im Schäumverhalten. Die gleichmässige Ausfüllung der Hohlform gelingt nur, wenn der Schäumvorgang völlig isotrop abläuft. Eingehende Untersuchungen des Schäumverhaltens von treibmittelhaltigen Methacrylnitril-Methacrylsäure-Mischpolymerisaten haben gezeigt, dass diese Isotropie nicht die Regel ist. Die Aufschäumung in der Dicke läuft nicht nur der Aufschäumung in Richtung der Plattenebene zeitlich voraus, sondern erreicht bei unbehinderter Expansion auch einen höheren Schäumfaktor. Darunter wird das Verhältnis der Abmessungen des Schaumstoffes zu den entsprechenden Abmessungen des ungeschäumten Ausgangsmaterials verstanden. Darüber hinaus treten innerhalb einer Platte Unterschiede in der Aufschäumung ein. So schäumt in manchen Fällen der Randbereich der Platte schneller und höher auf als die Mitte. Bei ungleichmässiger Erwärmung kann auch die Aufschäumung an einer Seite der Platte in stärkerem Masse ablaufen als an der anderen Seite.

Alle diese Unterschiede können die Ursache dafür sein, dass die aufschäumende Platte an einzelnen Stellen bereits die volle Höhe des Formhohlraumes ausfüllt, bevor die seitliche Expansion die Seitenwände des Formhohlraumes erreicht hat. Durch den Schäumdruck klemmt sich die Platte in der Hohlform fest und lässt es nicht mehr zu, dass die Plattenränder in Richtung auf die Seitenwände expandieren. Die Platte wächst gewissermassen um die Klemmstellen herum, wobei verzerrte und unbrauchbare Gebilde entstehen. Diese Probleme erweisen sich auch bei sorgfältiger Herstellung des schäumbaren Materials und möglichst gleichmässiger Erhitzung als unüberwindbar.

Aus der DE-B-1 504 276 ist es bekannt, zur Herstellung von blockförmigen Polyurethanschaumstoffen aus einer fliessfähigen Paste des schäumbaren Materials eine verschliessbare Hohlform zu verwenden, die als Abdichtung zwischen dem Formunterteil und dem Deckel einen porösen Vliesstoff enthält. Durch diesen kann die beim Schäumen verdrängte Luft, aber nicht der Schaumstoff selbst entweichen. Bei der Verarbeitung eines schäumbaren Materials in Plattenform in einer Hohlform dieser Art würden sich die gleichen Probleme wie bei einer Hohlform ohne Vlieseinlage ergeben, weil diese Probleme nicht mit der eingeschlossenen Luft in Zusammenhang stehen.

Es bestand die Aufgabe, die erwähnten Schwierigkeiten bei der Herstellung einer Schaumstoffplatte aus einer Platte aus heiss schäumbarem Kunststoff zu vermeiden. Die gestellte Aufgabe wurde bei dem Verfahren gemäss dem Oberbegriff des Patentanspruchs erfindungsgemäss dadurch gelöst, dass man als Begrenzungsflächen, mit denen die weitere Ausdehnung des Schaumstoffes begrenzt wird, die Innenflächen einer Hohlform mit einer Grundfläche, die der Fläche der schaumbaren Platte geometrisch ähnlich ist, und die die Längen- und Breitenabmessungen A und B hat, verwendet werden, und dass das Verhältnis C/c der lichten Höhe C der Hohlform zur Dicke c der ungeschäumten Platte grösser ist als die Verhältnisse A/a bzw. B/b zwischen den einander entsprechenden Abmessungen A, B der Grundfläche der Hohlform und der Fläche der ungeschäumten Platte (a, b). Die eingesetzte Platte aus schäumbarem Kunststoff hat einen Dickenschäumfaktor $S_d$ und einen Seitenschäumfaktor $S_s$ (wie weiter unten definiert).

Für die Abmessungen der Hohlform gilt erfindungsgemäss die Beziehung

$$\frac{C}{c \cdot S_d} > \frac{A}{a \cdot S_s} = \frac{B}{b \cdot S_s}$$

Bei Einhaltung dieser Bedingung wird beim Aufschäumen zuerst die Seitenausdehnung und danach die Dickenausdehnung mittels der Begrenzungsflächen gehemmt. Auf diese Weise berührt die Schaumstoffplatte die seitlichen Begrenzungsflächen zu einem früheren Zeitpunkt als die das Dickenwachstum begrenzende Fläche. Infolgedessen kann sich die Platte zwischen den die Dickenausdehnung begrenzenden Flächen so lange nicht festklemmen, wie noch eine Expansion in Richtung auf die Seitenbegrenzung stattfindet.

Das Verfahren der Erfindung wird in der Weise ausgeführt, dass als Begrenzungsflächen die Innenflächen einer Hohlform mit einer Grundfläche, die der Fläche der schäumbaren Platte geometrisch ähnlich ist, verwendet werden. Das ist dann der Fall, wenn die Grundfläche der Hohlform mit der Fläche der schäumbaren Platte in allen Winkeln nach Lage und Grösse übereinstimmt und alle Seiten im gleichen linearen Verhältnis grösser sind. Das Verfahren ist auch bei geringfügigen Abweichungen von der strengen geometrischen Ähnlichkeit noch durchführbar. Überschreiten die Abweichungen jedoch einen Wert von etwa 5%, so muss mit störenden Deformierungen und einer unvollständigen Ausfüllung der Hohlform gerechnet werden. In diesem Fall kann sich mämlich die Platte zwischen zwei gegenüberliegenden Seitenbegrenzungen festklemmen und eine weitere Bewegung verhindern, bevor die übrigen Plattenränder die Seitenbegrenzungen erreicht haben.

Das lineare Verhältnis der einander entsprechenden Seiten der Hohlformgrundfläche und der Kantenlänge der ungeschäumten Platte wird im allgemeinen so gewählt, dass es geringfügig kleiner als der unter den angewandten Schäumbedingungen bei freiem Aufschäumen erreichbare Schäumfaktor ist. Dadurch wird der Schäumvorgang kurz vor seinem natürlichen Abschluss durch die Berührung des Schaumstoffes mit den Begrenzungsflächen abgebrochen.

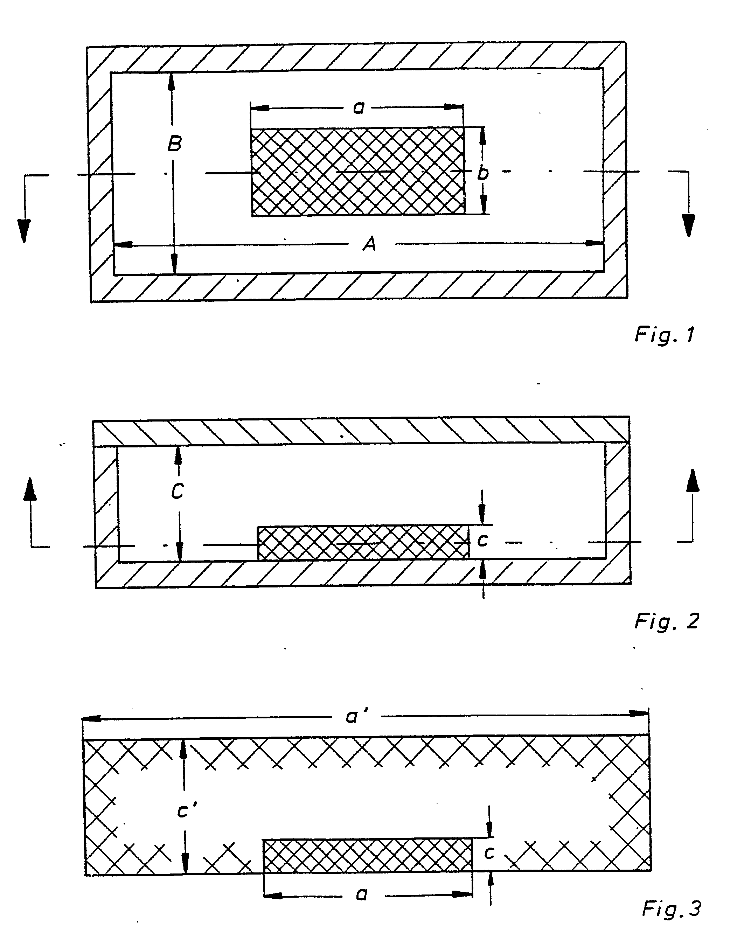

Wenn der beim freien Aufschäumen für das Dickenwachstum erreichbare Schäumfaktor $S_d$ grösser ist als der Schäumfaktor $S_s$ für das Seitenwachstum derselben Platte, so genügt es noch nicht, dass für das Dickenwachstum ein entsprechend höherer Formhohlraum zur Verfügung steht. Vielmehr soll das Verhältnis C/c der lichten Höhe der Hohlform zur Dicke der ungeschäumten Platte näher an dem Dickenschäumfaktor $S_d$ liegen, als das Verhältnis A/a bzw. B/b der Seitenlängen des Hohlformraumes zu den Seitenlängen der ungeschäumten Platte an dem Schäumfaktor $S_s$ in Richtung der Plattenfläche liegt. Die erfindungsgemäss angewendeten Massverhältnisse werden nachfolgend an der bevorzugten Ausführungsform, bei der eine rechteckige Platte aus schäumbarem Material in einer quaderförmigen Hohlform aufgeschäumt wird, noch näher erläutert. In den Fig. 1 und 2 ist die Lage der ungeschäumten Platte innerhalb der Hohlform in einem waagrechten und einem senkrechten Schnittbild dargestellt. Die ungeschäumte Platte hat eine rechteckige Grundfläche mit den Seitenlängen a und b und die Höhe c. Der Formhohlraum hat eine ebenfalls rechteckige Grundfläche mit den Seiten A und B und eine lichte Höhe C. Die geometrische Ähnlichkeit der beiden Rechteckflächen bedingt, dass zwischen den Seitenlängen die Verhältnisse

$$\frac{A}{a} = F_s \qquad \frac{B}{b} = F_s$$

gelten. Für das Dickenverhältnis gilt

$$\frac{C}{c} = F_d$$

Würde die schäumbare Platte mit den Abmessungen a, b und c unter den Verfahrensbedingungen frei aufgeschäumt, so würde sie, wie in Fig. 3 angedeutet, die Abmessungen a', b' und c' erreichen. Dann ist der (freie) Schäumfaktor für das Dickenwachstum

$$S_d = \frac{c'}{c}$$

und der (freie) Schäumfaktor für das Seitenwachstum

$$S_s = \frac{a'}{a} = \frac{b'}{b}$$

Die Grösse des Formhohlraumes ist so bemessen, dass $F_s < S_s$ und $F_d < S_d$ gilt. Darüber hinaus ist $F_s < F_d$, wobei allerdings das Verhältnis $F_d/F_s$ nahe an dem Wert 1 liegen kann. Es muss beachtet werden, dass die Schäumfaktoren $S_d$ und $S_s$ für ein bestimmtes schäumbares Material keine Materialkonstanten sind, sondern jeweils nur für bestimmte Schäumbedingungen, die im wesentlichen durch die Schäumtemperatur und die Aufheizgeschwindigkeit festgelegt sind, gelten. Die Zusammenfassung der erfindungsgemäss einzuhaltenden Bedingungen ergibt die oben schon erwähnte Beziehung

$$\frac{C}{c \cdot S_d} > \frac{A}{a \cdot S_s} = \frac{B}{b \cdot S_s}$$

Weiterhin ist das Verfahren der Erfindung nur dann mit sicherem Erfolg durchführbar, wenn die Faktoren $F_d$ und $F_s$ nicht stark von den Schäumfaktoren $S_d$ und $S_s$ abweichen. Im allgemeinen gilt

$$F_d = (0,55 \text{ bis } 1,0) \cdot S_d$$
$$F_s = (0,50 \text{ bis } 0,98) \cdot S_s$$

und vorzugsweise

$$F_d = (0,85 \text{ bis } 1,0) \cdot S_d$$
$$F_s = (0,80 \text{ bis } 0,98) \cdot S_s$$

Bei der Herstellung technischer Schaumstoffe aus schäumbarem Kunststoff liegen die freien Schäumfaktoren in der Regel etwa zwischen 1,5 und 4. Die erfindungsgemäss erreichte, mittels Begrenzungsflächen beschränkte Expansion liegt im wesentlichen in dem gleichen Bereich; man erhält Raumgewichte zwischen etwa 20 und 400 kg/m³.

Bei dem erfindungsgemässen Verfahren wird die Hohlform zuerst über die gesamte Grundfläche vollständig ausgefüllt, so dass der Schaumstoff ringsum an den Seitenbegrenzungen dicht anliegt, bevor er an irgendeiner Stelle eine Dicke erreicht, welche die lichte Höhe der Hohlform erreicht. Erst im weiteren Verlauf des Schäumvorganges erreicht der Schaumstoffkörper eine Dicke, die die lichte Höhe des Formhohlraumes vollständig erfüllt. Da der Schäumfaktor in allen Richtungen eine etwas weitere Expansion gestatten würde, liegt der Schaumstoff mit einem gewissen Druck an den Begrenzungsflächen an. Die mechanische Festigkeit der Hohlform muss ausreichen, um diesem Druck ohne Verformung zu widerstehen. Nach der vollständigen Ausfüllung der Form lässt man den Schaumstoff innerhalb der Form unter die Schäumtemperatur abkühlen, wobei unter der Schäumtemperatur diejenige Temperatur verstanden wird, bei der eine weitere Expansion stattfinden kann. Wenn – wie bei der Herstellung von Polymethacrylimidschaumstoffen – gleichzeitig mit dem Schäumvorgang eine chemische Umwandlung des Kunststoffes stattfindet, kann die für die Schäumung notwendige Mindesttemperatur im Laufe des Verfahrens ansteigen, so dass eine Abkühlung auf eine Temperatur ausreichen kann, die höher als die anfängliche Schäumtemperatur liegt. Vorzugsweise lässt man den Schaumstoff in der Hohlform bis unter die Erweichungstemperatur abkühlen, die allerdings meistens mit der Untergrenze der Schäumtemperatur zusammenfällt. Nach der Abkühlung kann der Schaumstoff der Hohlform entnommen werden und behält die der Hohlform entsprechende Gestalt bei. Man erhält daher unmittelbar Schaumstoffplatten von standardisierter Grösse und Dichte.

Die schäumbare Platte ist zu Beginn des Verfahrens wesentlich kleiner als der für die Expansion zur Verfügung stehende Formhohlraum. In ungünstigen Fällen kann es vorkommen, dass sich die Platte zu Beginn des Schäumvorganges so stark krümmt, dass sich die Ränder einrollen. Eine gleichmässige Ausfüllung der Hohlform ist dann nicht mehr möglich. Eine derartige Krümmung kann dadurch verhindert werden, dass die die Dickenausdehnung hemmenden Begrenzungsflächen zu Beginn des Verfahrens in einem geringeren Abstand gehalten werden, als für die volle Dickenexpansion erforderlich ist, und erst im Laufe des Verfahrens in die für die Durchführung des Verfahrens erforderliche Stellung angehoben werden. Die aufschäumende Platte stösst bei Beginn der Krümmung an die Begrenzungsflächen an, wodurch das Einrollen des Randes verhindert wird. Der Abstand der Begrenzungsflächen muss jedoch auch bei dieser Verfahrensweise grösser gehalten werden als die jeweils dickste Stelle der Platte, so dass sich diese nicht unter dem Schäumdruck festklemmen kann und die weitere Ausdehnung in der Hohlform gehemmt oder behindert wird.

Die endgültige Schäumtemperatur kann durch stufenweises Erhitzen erreicht werden. Mit Vorteil wird die schäumbare Platte vor Beginn des Schäumvorganges bis nahe an die Schäumtemperatur erwärmt. Dies kann ausserhalb der Hohlform in einem geeigneten Wärmeschrank erfolgen. Zur Einleitung des Schäumvorganges ist dann nur noch eine geringe weitere Erwärmung in der Hohlform erforderlich. Bei einer bevorzugten Ausführungsform der Erfindung wird die Schäumtemperatur nach der vollständigen Ausfüllung der Hohlform noch einmal gesteigert und die die Dickenausdehnung hemmende Begrenzungsfläche etwas weiter angehoben, so dass eine zusätzliche Dickenexpansion eintreten kann. Erhöhte Festigkeitswerte in Richtung der Plattenebene lassen sich erreichen, indem man vor der Abkühlung mittels einer Presse die Dickenbegrenzungsflächen auf einen wesentlich geringeren Abstand bringt, wobei der Schaumstoff komprimiert wird. Durch dieses Verfahren erhält man gemäss DE-PS 2 114 524 Schaumstoffe mit verbesserten Festigkeitseigenschaften.

Das Verfahren der Erfindung ist mit allen schäumbaren Kunststoffen durchführbar, die beim Erhitzen dreidimensional aufschäumen. Sie enthalten in einer Kunststoffmatrix in feinverteilter Form ein Treibmittel, das bei der Schäumtemperatur in den gasförmigen Zustand übergeht. Zur Herstellung von Hartschaumstoffen werden Kunststoffe verwendet, deren Erweichungstemperatur spätestens nach Abschluss des Schäumverfahrens oberhalb der Raumtemperatur liegt. Während des Schäumvorganges befindet sich der Kunststoff im thermoelastischen oder thermoplastischen Zustand. Wird dagegen ein Kunststoff mit einer unterhalb der Raumtemperatur liegenden Erweichungstemperatur verwendet, so erhält man einen Weichschaumstoff. In diesem Falle wird die Expansion nur im thermoplastischen Zustand des Kunststoffes durchgeführt. Nach weitgehender oder vollständiger Aufschäumung kann der thermoplastische Zustand gegebenenfalls infolge Vernetzung oder anderer chemischer Umwandlungen in einen thermoelastischen Zustand übergehen.

Für die Herstellung von heiss schäumbaren Kunststoffen sind verschiedene Verfahren bekannt. Man kann beispielsweise den Kunststoff in Pulverform mit dem Treibmittel vermischen und zu einer schäumbaren Platte verpressen. Soweit nicht irreversibel in den Gaszustand übergehende Treibmittel verwendet werden, kann das Verpressen in der Wärme unter einem Druck vorgenommen werden, der das Aufschäumen verhindert. Dazu eignen sich z.B. auch Schneckenpressen. Geeignete Kunststoffe für derartige Verfahren sind z.B. PVC, Polycarbonatkunststoffe, Polymethylmethacrylat, Polystyrol oder Mischpolymerisate des Styrols. Als Treibmittel kommen z.B. organische Flüssigkeiten in Betracht, die bei der Erweichungstemperatur des verwendeten Kunststoffes im Dampfzustand vorliegen. Dazu gehören Benzinkohlenwasserstoffe, Chlorkohlenwasserstoffe, Ester, Ketone oder Alkohole. Treibmittel, die irreversibel in den Gaszustand übergehen, sind z.B. Natriumbicarbonat, Ammoniumcarbonat, Harnstoff, Formamid oder Azo-bis-isobutyronitril. Die für die Verarbeitung dieser schäumbaren Kunststoffe geeigneten Temperaturen liegen im allgemeinen im Bereich von 100 bis 200 °C.

Mit besonderem Vorteil wird das Verfahren der Erfindung mit solchen Kunststoffen durchgeführt, die beim Erhitzen in Polyacryl- oder Methacrylimide übergehen. Diese Kunststoffe sind im wesentlichen Mischpolymerisate aus Acryl- und/oder Methacrylsäure und Acryl- und/oder Methacrylnitril und gegebenenfalls in untergeordneten Mengen aus weiteren, damit mischpolymerisierbaren Comonomeren. Die Kunststoffe werden in der Regel durch radikalische Polymerisation der genannten Monomeren in Anwesenheit eines Treibmittels, das mit dem entstehenden Mischpolymerisat verträglich ist, erzeugt. Geeignete Treibmittel sind z.B. Formamid, Monomethylformamid, Harnstoff, Dimethylharnstoff, niedere aliphatische Alkohole, wie Isopropylalkohol oder tert.-Butylalkohol, oder Wasser. Die Herstellung schäumbarer Platten aus diesen Kunststoffen ist z.B. in den GB-PS 1 078 425, 1 045 229, der DE-PS 1 817 156 oder der DE-OS 2 726 259 beschrieben. Die erhaltenen homogenen Platten von beispielsweise 10 bis 30 mm Dicke lassen sich zu Tafeln gewünschter Grösse zuschneiden und bei Temperaturen zwischen 170 und 220 °C zu Polyacryl- bzw. Polymethacrylimidschaumstoffen mit Raumgewichten zwischen 20 und 400 kg/m³ aufschäumen.

Das Verfahren wird nachfolgend an typischen Ausführungsbeispielen näher erläutert.

Beispiel 1

Eine Platte mit den Abmessungen 745,5 × 406,5 × 22 mm, bestehend aus 100 Teilen eines Mischpolymerisates von Methacrylsäure und Methacrylnitril im Verhältnis 60:40, dem 5 Teile Harnstoff und 1 Teil Formamid zugesetzt sind, wird in eine Hohlform, deren Masse 1980 × 1080 × 70 mm betragen, eingelegt. Vor dem Einlegen der Polymerisatplatte war die Form bereits auf 182 °C vorgeheizt worden. Nach dem Einlegen der Polymerisatplatte und Schliessen der Form wurde diese Temperatur 2 h beibehalten. Nach Abkühlung auf 80 °C wurde der Form ein geschäumter Block entnommen, der in seinen Abmessungen exakt den Abmessungen des Formhohlraums entsprach. Die Rohdichte des Schaumstoffblockes betrug 53 kg/m³. Die freien Schäumfaktoren bei 182 °C betragen $S_s = 2,9$ und $S_d = 3,24$.

Beispiel 2

Eine Polymerisatplatte, der in Beispiel 1 beschriebenen Zusammensetzung, mit den Abmessungen 1020 × 510 × 22 mm wurde 1 h bei 130 °C vorgewärmt. Die vorgewärmte Platte wurde in eine heiz- und kühlbare Form gelegt, die eine Fläche mit den Massen von 2400 × 1200 mm aufwies. Die Formhöhe betrug 62 mm. Das Formwerkzeug hatte eine Temperatur von 176 °C. Nach einer Schäumzeit von 110 min wurde die Form auf 189 °C hochgeheizt. Nach Ablauf weiterer 10 min wurden die oberen und unteren Formbegrenzungsflächen um 3 mm auseinandergefahren und in dieser Stellung bis zur Abkühlung des Schaumstoffblockes auf 80 °C belassen. Der entnommene Schaumstoffblock hatte eine Grösse von 2395 × 1196 × 64 mm. Die Rohdichte betrug 76 kg/m³.

Die freien Schäumfaktoren bei 176 °C betragen $S_s = 2,62$ und $S_d = 2,85$.

**Patentansprüche**

1. Verfahren zur Herstellung einer Schaumstoffplatte der Dicke C und der Längen- und Breitenabmessung A und B aus einer Platte der Dicke c und der Längen- und Breitenabmessung a und b aus heiss schäumbarem Kunststoff, wobei man die Platte auf eine das Aufschäumen auslösende Temperatur erhitzt und im wesentlichen isotrop nach allen Richtungen des Raumes expandieren lässt und den Schäumvorgang mittels Begrenzungsflächen, die die Seitenausdehnung und die Dickenausdehnung hemmen, begrenzt und die gebildete Schaumstoffplatte in Berührung mit den Begrenzungsflächen unter die Schäumtemperatur abkühlt, dadurch gekennzeichnet, dass als Begrenzungsflächen die Innenflächen einer Hohlform mit einer Grundfläche, die der Fläche der schäumbaren Platte geometrisch ähnlich ist und die die Längen- und Breitenabmessungen A und B hat, verwendet werden, und dass das Verhältnis C/c der lichten Höhe C der Hohlform zur Dicke c der ungeschäumten Platte grösser ist als die Verhältnisse A/a bzw. B/b zwischen den einander entsprechenden Abmessungen A, B der Grundfläche der Hohlform und der Fläche der ungeschäumten Platte (a, b), wobei die eingesetzte Platte einen Dickenschaumfaktor $S_d$ und einen

Seitenschäumfaktor $S_s$ hat und für die Abmessungen der Hohlform weiterhin die Beziehung

$$\frac{C}{c \cdot S_d} > \frac{A}{a \cdot S_s} = \frac{B}{b \cdot S_s}$$

gilt, wodurch beim Aufschäumen zuerst die Seitenausdehnung und danach die Dickenausdehnung mittels der Begrenzungsflächen gehemmt wird.

2. Verfahren nach Anspruch 1, dadurch gekennzeichnet, dass man es bei einer ersten Schäumtemperatur bis zum Anliegen des Schaumstoffes an den die Dickenausdehnung hemmenden Begrenzungsflächen durchführt, diese Begrenzungsflächen anschliessend auf einen grösseren Abstand voneinander bringt und den Schaumstoff bei einer höheren Schäumtemperatur bis zum erneuten Anliegen an den Begrenzungsflächen expandieren lässt.

3. Verfahren nach den Ansprüchen 1 oder 2, dadurch gekennzeichnet, dass der schäumbare Kunststoff aus einem Mischpolymerisat aus Acryl- oder/und Methacrylsäure und Acryl- oder/und Methacrylnitril und gegebenenfalls in untergeordneten Mengen weiteren, damit mischpolymerisierbaren Comonomeren, sowie einem mit dem Mischpolymerisat verträglichen Treibmittel besteht.

## Claims

1. Process for producing a foam plastics sheet with a thickness C and length and width dimensions A and B from a sheet of thickness c and length and width dimensions a and b from hot-foamable plastics, wherein the sheet is heated to a temperature which initiates foaming and is allowed to expand substantially isotropically in every direction in space, and the foaming process is limited by boundary surfaces which restrict lateral expansion and expansion in thickness, and the foam plastics sheet formed is cooled to below the foaming temperature whilst remaining in contact with the boundary surfaces, characterised in that the boundary surfaces used are the inner surfaces of a hollow mould with a base area which is geometrically similar to the area of the foamable sheet and which has length and width dimensions A and B, and in that the ratio C/c of the internal height C of the hollow mould to the thickness c of the unfoamed sheet is greater than the ratios A/a and B/b between the corresponding dimensions A, B of the base area of the hollow mould and the area of the unfoamed sheet (a, b), whilst the sheet used has a thickness foaming factor $S_d$ and a lateral foaming factor $S_s$ and the dimensions of the hollow mould obey the equation

$$\frac{C}{c \cdot S_d} > \frac{A}{a \cdot S_s} = \frac{B}{b \cdot S_s}$$

as a result of which, during foaming, first the lateral expansion and then the expansion in thickness is restricted by the boundary surfaces.

2. Process as claimed in claim 1, characterised in that it is carried out at a first foaming temperature until the foam plastics makes contact with the boundary surfaces which restrict expansion in thickness, then these boundary surfaces are moved apart so as to be at a greater spacing from each other and the foam plastics is allowed to expand at a higher foaming temperature until it again makes contact with the boundary surfaces.

3. Process as claimed in claim 1 or 2, characterised in that the foamable plastics material consists of a copolymer of acrylic and/or methacrylic acid and acrylonitrile and/or methacrylonitrile and optionally, in minor amounts, other comonomers copolymerisable therewith, and a propellant which is compatible with the copolymer.

## Revendications

1. Procédé de préparation d'une plaque de matière-mousse d'épaisseur C et de dimensions en longueur et en largeur A et B à partir d'une plaque d'épaisseur c et de dimensions en longueur et en largeur a et b d'une résine synthétique gonflable en mousse à chaud, dans lequel on chauffe la plaque à une température déclenchant le gonflement en mousse et on la laisse gonfler dans des conditions essentiellement isotropes dans toutes les directions de l'espace et on limite le processus de gonflement à l'aide de surfaces de limitation qui arrêtent l'expansion latérale et l'expansion en épaisseur, et on refroidit la plaque de mousse formée au-dessous de la température de gonflement en contact avec les surfaces de limitation, caractérisé en ce qu'on utilise comme surfaces de limitation les surfaces intérieurs d'un moule creux ayant une surface de fond semblable géométriquement à la surface de la plaque gonflable en mousse, et les dimensions en longueur et en largeur A et B, et en ce que le rapport C/c de la hauteur libre C du moule creux à l'épaisseur c de la plaque non gonflée est supérieur aux rapports A/a et B/b respectifs entre les dimensions correspondant entre elles A, B de la surface de fond du moule creux et de la surface de la plaque non gonflée (a,b), la plaque mise en œuvre ayant un facteur de gonflement en épaisseur $S_d$ et un facteur de gonflement latéral $S_s$, les dimensions du moule creux satisfaisant à la relation

$$\frac{C}{c \cdot S_d} > \frac{A}{a \cdot S_s} = \frac{B}{b \cdot S_s}$$

de sorte qu'au gonflement en mousse les surfaces de limitation arrêtent d'abord l'expansion latérale puis l'expansion en épaisseur.

2. Procédé selon la revendication 1, caractérisé en ce qu'on le met en œuvre à une première température de gonflement jusqu'à contiguïté de la mousse avec les surfaces de limitation arrêtant l'expansion en épaisseur, on écarte ensuite ces surfaces de limitation l'une de l'autre d'une plus grande distance et on laisse la mousse gonfler à une température de gonflement plus élevée jusqu'à nouvelle contiguïté avec les surfaces de limitation.

3. Procédé selon la revendication 1 ou 2, caractérisé en ce que la résine synthétique gonflable en mousse consiste en un copolymère de l'acide acrylique et/ou méthacrylique et de l'acrylonitrile et/ou du méthacrylonitrile avec, le cas échéant, des proportions mineures d'autres comonomères copolymérisables, et un agent gonflant compatible avec le copolymère.

Fig. 1

Fig. 2

Fig. 3